# EUROPÄISCHE PATENTSCHRIFT

(11) **EP 2 418 234 B1**
(45) Veröffentlichungstag und Bekanntmachung des Hinweises auf die Patenterteilung: **27.03.2013**
(21) Anmeldenummer: 11173218.6
(22) Anmeldetag: 08.07.2011
(51) Int. Cl.: C08G 65/08, C09D 171/00

(54) **Dispergiermittel und Verfahren zu deren Herstellung**
Dispersion agent and method for its manufacture
Agent dispersant et son procédé de fabrication

(30) Priorität: 10.08.2010 DE 102010039140
(43) Veröffentlichungstag der Anmeldung: 15.02.2012
(73) Patentinhaber: Evonik Goldschmidt GmbH, 45127 Essen (DE)
(72) Erfinder: Veit, Thomas, Dr., 58097 Hagen (DE); Kleinsteinberg, Frank, 46519 Alpen (DE); Mergenthaler, Jochen, 45219 Essen (DE); Redeker, Stefanie, 42327 Wuppertal (DE); Christofzik, Anja, 44805 Bochum (DE); Brötzmann, Andre, 45899 Gelsenkirchen (DE); Favresse, Philippe, 45136 Essen (DE); Glos, Martin, 46325 Borken (DE); Schubert, Frank, Dr., 47506 Neukirchen-Vluyn (DE)

(56) Entgegenhaltungen:
- EP-A2- 1 167 452
- EP-A2- 1 757 664
- WO-A2-2008/074564

## Beschreibung

Die vorliegende Erfindung betrifft durch Alkoxylierung erhaltene, gegebenenfalls styroloxidhaltige und gegebenenfalls phosphatierte phenolische Verbindungen, die unter dem Sammelbegriff Cardanol bzw. Cashew Nut Shell Liquid (CNSL) zusammengefasst werden, und deren Verwendung als Additive, insbesondere als Dispergiermittel in wässrigen Pigmentpasten, für wässrige Beschichtungsstoffe und Druckfarben sowie Verfahren zu deren Herstellung.

Die Verwendung von Cardanolen ist seit vielen Jahrzehnten bekannt. So wird über die ungesättigte Seitenkette polymerisiertes Cardanol nach anschließender Formylierung zu einem Cardanol-Formaldehyd-Harz als Reibpartikel in Automobilbremsen eingesetzt, da sich der temperaturabhängige Reibungskoeffizient zwischen dem verwendeten Harz und dem Asbest der Bremsen durch Einsatz von Cardanol-Formaldehyd-Harzen stabilisiert und somit gleichmäßiges Bremsen möglich wird [siehe u. a. US 2686140, US 3227249, FR 1573564, US 4072650].

Cardanol wird ebenfalls zur Herstellung von medizinisch wirksamen Substanzen wie Phosphodiesterasehemmern [P. P. Kumar; R. Paramashivappa; P. J. Vithayathil, P. V. Subba Rao, A. Srinivasa Rao, J. Agric. Food Chem 50 (2002) 4705], Glycerinaldehyd-3-phosphat-Dehydrogenasehemmern [Junia M. Pereira, Richele P. Severino, Paulo C. Vieira, Joao B. Fernandes, M. Fatima G. G. da Silva, Aderson Zottis, Adriano D. Andricopulo, Glaucius Oliva, Arlene G. Correa, Bioorganic & Medicinal Chemistry 16 (2008) 8889], Calciumantagonisten [P. P. Kumar, Stefanie C. Stotz, R. Paramashivappa, Aaron M. Beedle, Gerald W. Zamponi, A. Srinivasa Rao, Molecular Pharmacology 61 (2002) 649 oder Antibiotika [WO 2008062436] beschrieben.

Cardanol wird weiterhin in einer Mannich Reaktion mit Formaldehyd und Aminen wie Ethylendiamin oder Diethyltriamin zu Phenalkaminen umgesetzt. Phenalkamine haben aufgrund der niedrigeren Aushärtetemperatur gegenüber der Verwendung von Polyamiden Eingang als Härter in die Herstellung von Bootsbeschichtungen und Klebstoffen, von lösungsmittelfreien Bodenbeschichtungen, für Beschichtungen landwirtschaftlicher Geräte sowie für Tank- und Rohrauskleidungen gefunden. Sie bieten eine hohe Beständigkeit gegenüber Feuchtigkeit während der Aushärtung und sowie gute chemische Beständigkeit und Elastizität [siehe u. a. R. A. Gardine, Modern Paint and Coatings 68 (1978) 33; P. H. Gedam, P. S. Sampathkumaran, Progress in Organic Coatings 14 (1986) 115; B. S. Rao, S. K. Pathak, Journal of Applied Polymer Science 100 (2006) 3956; J.-L. Dallons, European Coatings Journal 6 (2005) 34, US 2004048954, US 5075034]. Mittlerweile sind auch durch Hydrosilylierung hergestellte Cardanol basierte Härter bekannt [US 2008275204]. Cardanol basierte Phenolharze dienen als umweltfreundliche säureresistente Antikorrosionsbeschichtungen [CN 101125994], die chemischen und mechanischen Eigenschaften von Beschichtungen konnten durch chemisch modifiziertes Cardanol verbessert werden [A. I. Aigbodion, C. K. S. Pillai, I. O. Bakare, L. E. Yahaya, Paintindia 51 (2001) 39; V. Madhusudhan, B. G. K. Murthy, Progress in Organic Coatings 20 (1992) 63; M. Yaseen, H. E. Ashton, Journal of Coatings Technology 50 (1978), 50].

Für die zuverlässige Dispergierung und Stabilisierung von Pigmenten in Beschichtungssystemen verwendet man im allgemeinen Dispergiermittel, um so die für eine effektive Dispergierung der Feststoffe benötigten mechanischen Scherkräfte zu reduzieren und gleichzeitig möglichst hohe Füllgrade zu realisieren. Die Dispergiermittel unterstützen das Aufbrechen von Agglomeraten, benetzen und belegen als oberflächenaktive Materialien die Oberfläche der zu dispergierenden Partikel und stabilisieren diese gegen eine unerwünschte Reagglomeration. Die Stabilisierung der Pigmente ist in der Lackindustrie von großer Bedeutung, denn Pigmente bestimmen als wichtiger Formulierungsbestandteil das optische Erscheinungsbild und die physikalisch chemischen Eigenschaften einer Beschichtung. Damit sie in der Beschichtung ihre Wirkung optimal entfalten können, müssen sie während des Dispergierprozesses gleichmäßig und feinteilig im Lack verteilt werden. Die Verteilung muss stabilisiert werden, damit dieser Zustand bei der Herstellung, der Lagerung, der Verarbeitung und der anschließenden Filmbildung erhalten bleibt. Eine Wiedervereinigung der Primärteilchen und Aggregate kann zu Bodensatzbildung, Viskositätserhöhung, Glanzgradverlusten, ungenügender Farbtiefe, geringem Deckvermögen, Aufund Ausschwimmen der Pigmente und schlecht reproduzierbaren Farbtönen führen [Goldschmidt, Streitberger; BASF Handbuch Lackiertechnik, BASF Münster und Vincentz Verlag Hannover 2002, S. 205 ff].

Eine Vielzahl verschiedener Substanzen findet heute Verwendung als Dispergiermittel für Feststoffe. Neben sehr einfachen, niedermolekularen Verbindungen, wie z. B. Lecithin, Fettsäuren und deren Salze, wird auch die Verwendung von Fettalkoholalkoxylaten [J. Bielmann, Polymers Paint Colour Journal 3 (1995) 17] und Polymeren [Frank. O. H. Pirrung, Peter H. Quednau, Clemens Auschra, Chimia 56 (2002) 170] als Dispergiermittel beschrieben. Para-Alkylphenolethoxylate können ebenfalls als Dispergieradditive für Pigmentpasten eingesetzt werden [J. Bielmann, Polymers Paint Colour Journal 3 (1995) 17]. Sie gelten als optimale Dispergieradditive, da sie neben ihrer Leistungsfähigkeit der geringe Preis auszeichnet. Aus ökotoxikologischen Gründen sind sie jedoch aufgrund ihres estrogenen Verhaltens in die Kritik geraten [A. M. Soto, H. Justicia, J.W. Wray, C. Sonnenschein, Environ Health Perspect 92 (1991) 167]. Darüber hinaus wird im Zusammenhang mit Nonylphenolethoxylaten die Ähnlichkeit des Nonylphenols mit dem weiblichen Geschlechtshormon 17-β-Östradiol diskutiert. Ein Eingriff derartiger Abbauprodukte in die Fertilitätszyklen von Fischen und Säugetieren gilt als belegt [C. A. Staples. J. Weeks, J. F. Hall, C. G. Naylor, Environmental Toxicology and Chemistry 17 (1998) 2470; A. C. Nimrod, W. H. Benson, Critical Reviews in Toxicology, 26 (1996) 335]. Daher ist ihr Einsatz in Wasch- und Reinigungsmitteln in vielen Ländern bereits verboten. Für die Lack- und Druckfarbenindustrie ist ähnliches zu erwarten.

Als Alternative zum Einsatz von para-Alkylphenolalkoxylaten präsentieren die Patentanmeldungen EP 1167452 und EP 0940406 die Verwendung styroloxidhaltiger Polyalkylenoxide mit geradkettigem oder verzweigtem oder cycloaliphatischem Starter, welche durch nachfolgende Phosphorylierung zu den entsprechenden Phosphorsäureestern umgesetzt werden. Die Rohstoffe für die dort beschriebenen Polyalkylenoxide sind jedoch ausschließlich erdölbasierte Rohstoffe, die dem generellen Bestreben nach mehr Nachhaltigkeit auch in der Beschichtungsindustrie keine Rechnung tragen. [S. Milmo, Coatings Comet 17 (2009) 10; T. Wright, Coatings World 4 (2008) 46; Robson F. Storey. The Waterborne Symposium, Advances in Sustainable Coatings Technology, Proceedings 2008 465)].

Ethoxylierte Cardanolbasierte Tenside sind als Dispergieradditive für wasserbasierte Pigmentpräparationen, Druckfarben und Beschichtungsstoffe bereits aus US 7,084,103 bekannt. Die dort beschrieben Strukturen sind jedoch bei gewöhnlichen Verarbeitungstemperaturen fest, was für die technische Anwendung beim industriellen Verarbeiter einen Nachteil bedeutet.

Dispersionsfarben bergen aber auch für den Anwender eine Reihe von Nachteilen. So kann es beim Einsatz von Dispersionsfarben im Außenbereich bei einer erst relativ frisch beschichtete Fassade und einer nur kurzzeitigen Regeneinwirkung zur Bildung von Glanzstellen an Fassaden, nach dem optischen Erscheinungsbild oft auch als "Schneckenspuren" bezeichnet, kommen. Dispersionsfarben enthalten immer wasserlösliche Bestandteile, wie z. B. Emulgatoren im Bindemittel, Verdicker und Netzmittel. Diese sind für die Herstellung, Lagerstabilität und Verarbeitung technisch unabdingbar. Bei der Trocknung eines frisch aufgetragenen Anstrichs werden diese Additive, je nach Saugfähigkeit des betreffenden Substrates und den herrschenden Trocknungsbedingungen, teilweise in den Untergrund abgesaugt, zum Teil gelangen sie aber auch an die Oberfläche des Anstrichfilms, wo sie einen "Belag" bilden. Regnet es nun nur kurz auf die Fassade, vor allem nach relativ begrenzter Trocknungsdauer, oder liegen andere ungünstige Witterungsbedingungen vor, so werden die wasserlöslichen Bestandteile wieder gelöst und bleiben dann nach der Rücktrocknung als glänzende Stellen in Tropfenform oder streifenförmig so lange stehen, bis die Fassade durch längeres Beregnen praktisch "sauber" gespült wird. Der Anstrich wird durch das Auswaschen der wasserlöslichen Anteile in seinen Qualitätseigenschaften nicht nachteilig verändert. Allerdings ist das optische Erscheinungsbild einer frisch gestrichenen Fassade deutlich getrübt.

Für Beschichtungen spielt auch die Wasserquellbarkeit eine wichtige Rolle. Darunter wird die Fähigkeit einer Beschichtung, Wasser aufzunehmen und später wieder abzugeben, verstanden. Eine schnelle Wasserquellbarkeit und damit eine hohe Wasseraufnahme sind in aller Regel für den Untergrund schädlich. Allerdings darf das Anstrichsystem auch nicht völlig unquellbar sein, da die Beschichtung sonst bei Feuchtigkeiseinwirkung durch Blasenbildung vom Untergrund abgehoben werden würde [Zorll, Römpp Lexikon Lacke und Druckfarben, Thieme Verlag Stuttgart New York 1998, S. 625].

Ein weiteres wichtiges Kriterium einer qualitativ hochwertigen Farbe ist die Reinigungsfähigkeit. Diese wird als "Nassabriebbeständigkeit" gemessen und ist das Maß für die Widerstandsfähigkeit einer Beschichtung gegen mechanischen Abrieb, z. B. beim Reinigen der Oberfläche.

Der vorliegenden Erfindung lag daher die Aufgabe zugrunde, Dispergieradditive bereitzustellen, die leicht verarbeitet werden können und die vorzugsweise auf nachwachsenden Rohstoffen basieren und die insbesondere zur Verwendung in wässrigen Pigmentpasten zum Abtönen wässriger Lacke und Druckfarben geeignet sind, und die vorzugsweise auch die Bildung von Schneckenspuren verringern, die Wasserquellbarkeit herabsetzen und/oder die Naßabriebbeständigkeit verbessern.

Überrachenderweise wurde gefunden, dass diese Aufgabe durch bei einer Temperatur von 20 °C und einem Druck von 101325 Pa flüssige Verbindungen der Formel (I) gelöst wird.

Gegenstand der vorliegenden Erfindung sind deshalb bei einer Temperatur von 20 °C und einem Druck von 101325 Pa flüssige Verbindungen der Formel (I), ein Verfahren zu deren Herstellung, Zusammensetzungen, die einer oder mehrere der erfindungsgemäßen Verbindungen aufweisen sowie die Verwendung der Verbindungen bzw. der Zusammensetzungen als Additive, insbesondere als Dispergieradditive, bevorzugt für wässrige Pigmentsysteme.

Die erfindungsgemäßen Verbindungen oder Gemische davon haben den Vorteil, dass sie bei einer Temperatur von 20 °C und einem Druck von 101325 Pa als Flüssigkeit vorliegen und damit sehr leicht verarbeitet werden können. Insbesondere wenn die erfindungsgemäßen Verbindungen auch noch mischbar mit der flüssigen Phase des Pigmentssystems, bevorzugt Wasser, sind, lassen sich die erfindungsgemäßen Verbindungen wesentlich leichter und gleichmäßiger in das Pigmentsystem einmischen als dies bei der Verwendung von Additiven der Fall ist, die als Feststoff vorliegen.

Durch den flüssigen Aggregatzustand der Verbindung sind die erfindungsgemäßen Verbindungen als Dispergieradditive leichter in der Lage sich gleichmäßig an der Oberfläche der Pigmente anzulagern und so ihrer Aufgabe gerecht zu werden.

Die Verwendung der erfindungsgemäßen Verbindungen als Dispergiermittel hat zudem den Vorteil, dass im Vergleich zu Additiven des Stands der Technik niedrigere Rub-Out Werte und höhere Farbwerte erzielt werden. Ein weiterer Vorteil der Verwendung der erfindungsgemäßen Verbindungen besteht darin, dass so hergestellte Pigmentpasten eine hohe Lagerstabilität aufweisen.

Die erfindungsgemäßen Verbindungen, diese aufweisende Zusammensetzungen, ein Verfahren zu deren Herstellung sowie die Verwendung der erfindungsgemäßen Verbindungen/Zusammensetzungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend Angaben in Prozent gemacht so sind diese Angaben, wenn nicht anders angegeben Angaben in Gewichtsprozent. Werden nachfolgend Mittelwerte genannt, so handelt es sich dabei, wenn nicht anders angegeben, um Zahlenmittel.

Die erfindungsgemäßen bei einer Temperatur von 20 °C und einem Druck von 101325 Pa flüssigen Verbindungen oder flüssige Mischungen bestehend aus Verbindungen der Formel (I), zeichnen sich dadurch aus, dass die Verbindungen der allgemeinen Formel (I)

[R-O(SO)ₐ(EO)_{b}(CH₂CHCH₃O)_{c}(BO)_{d}]ₓ-[PO-(OR⁶)₃₋ₓ]_{y}-R⁴_{z} (I)

genügen, mit R= 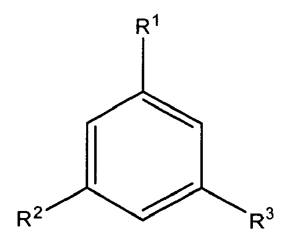 R¹ = Bindung zur Einheit -O(SO)ₐ(EO)_{b}(CH₂CHCH₃O)_{c}(BO)_{d}-
R² = H oder-O(SO)ₐ(EO)_{b}(CH₂CHCH₃O)_{c}(BO)_{d}-[PO-(OR⁶)_{2-x'}(R⁵)_{x'}]_{y'}-R⁴_{z}, vorzugsweise H, R³ = gleicher oder verschiedener gesättigter oder ungesättigter aliphatischer Kohlenwasserstoffrest mit 15 Kohlenstoffatomen und 25 bis 31 Wasserstoffatomen,
R⁴ = gleich oder verschieden H, M+ oder Alkylrest mit 1 bis 3 C-Atomen
R⁵ = organischer Rest,
R⁶ = gleich oder verschieden H oder M⁺
M⁺ = Metall oder Halbmetallkation, vorzugsweise ein Silizium-, ein Aluminium, ein Alkalimetall- oder Erdalkalimetall-Kation,
SO = Styroloxid,
EO = Ethylenoxid,
BO = Butylenoxid und
a = 0 bis 3, vorzugsweise 0, 1 oder 2, bevorzugt 0 oder 1,
b = 0 bis 100, vorzugsweise mindestens 1, bevorzugt 1 bis 20, besonders bevorzugt 6 bis 12,
c = 0 bis 20, vorzugsweise 0 oder 1 bis 5,
d = 0 bis 3, vorzugsweise 0 oder 2 oder 3,
x = 1 bis 3, vorzugsweise 1 oder 2, bevorzugt 1,
y = 0 oder 1, vorzugsweise 1,
z = 0 oder 1, vorzugsweise 0,
y' = 0 oder 1, vorzugsweise 0,
z' = 0 oder 1, vorzugsweise 1 und
x' = 0 bis 2, vorzugsweise 0,
mit der Maßgabe, dass y + z = 1 ist, dass wenn z = 1 auch x = 1 ist, dass y' + z' = 1, dass wenn z' = 1 auch x' = 1 ist, dass wenn a, c und d = 0 sind, b von 1 bis 12, bevorzugt von 6 bis 10 ist, dass wenn c oder d ungleich 0 ist, einer der anderen Indizes a bis d ebenfalls ungleich 0 ist, und dass die Summe a + b + c + d (pro vorhandener Einheit - O(SO)ₐ(EO)_{b}(CH₂CHCH₃O)_{c}(BO)_{d}-) größer 3 ist.

Die verschiedenen Monomereinheiten der in der Formel (I) angegebenen Bausteine können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte (Zahlenmittel) zu betrachten.

Der Rest R³ kann ein vollständig gesättigter Kohlenwasserstoffrest oder ein ein-, zwei- oder dreifach ungesättigter Kohlenwasserstoffrest sein. Handelt es sich bei den Verbindungen der Formel (I) um ein Gemisch von Verbindungen, kann dieses ausschließlich solche Verbindungen der Formel (I) aufweisen, bei denen R³ jeweils identisch ist oder bei denen die Reste R³ verschieden sind. Bevorzugt sind als Verbindungen der Formel (I) solche, deren Rest R sich von einer decarboxylierten Anacardsäure, einem aus der Schale der Cashewnuß gewinnbaren Gemisch von (Z,Z)-6-(Pentadecanyl)salicylsäuren, mit 0 bis 3 Doppelbindungen in der Seitenkette, ableitet. Besonders bevorzugt sind als Verbindungen der Formel (I) solche, bei denen die Reste R³ zu 35 bis 45 mol-%, vorzugsweise zu ca. 42 mol-% dreifach ungesättigt, zu 30 bis 40 mol-%, vorzugsweise zu ca. 34 mol-% zweifach ungesättigt, zu 15 bis 25 mol-%, vorzugsweise zu ca. 22 mol-% einfach ungesättigt, und zu 0 bis 5 mol-%, vorzugsweise zu ca. 2 mol-% gesättigt sind.

Durch die jeweilige Anzahl der Einheiten mit den Indizes a bis d kann spezifisch der HLB-Wert gesteuert werden. Zudem kann gegebenenfalls sterischen Erfordernissen der Pigmentoberfläche Rechnung getragen werden. Durch die Anzahl der jeweiligen Einheiten kann zudem die Verträglichkeit der Verbindungen mit dem jeweiligen Pigmentsystem gezielt angepasst werden.

Besonders bevorzugte Verbindungen der Formel (I) sind solche, bei denen b ungleich 0, vorzugsweise 6 bis 20, bevorzugt 6 bis 12 ist. Durch einen Mindestanteil an Ethylenoxid-einheiten kann erreicht werden, dass die Verbindungen der Formel (I) wasserlöslich bzw. in jedem Verhältnis ohne Bildung einer zweiten Phase mit Wasser mischbar sind.

Besonderes bevorzugte Verbindungen sind solche, bei denen R² = H, y = 1 und z = 0 ist, und vorzugsweise x = 1 ist.

Die mit den Indizes a, b, c und/oder d bezeichneten Einheiten können statistisch verteilt oder blockweise angeordnet sein. Vorzugsweise sind die mit den Indizes a, b, c und/oder d bezeichneten Einheiten blockweise angeordnet.

Es kann vorteilhaft sein, wenn als letzte Einheit der mit den Indizes a, b, c und d Einheiten, also die vom Rest R am weitesten entfernte Einheit und damit eine Bindung zum Phosphor oder zu R⁴ aufweist, eine Ethylenoxideinheit ist.

Bevorzugte Verbindungen der Formel (I) sind solche, die ausschließlich Einheiten der Indizes a und b aufweisen. Besonders bevorzugte Verbindungen sind solche, gezählt ab Cardanol Rest R als Startalkohol zunächst einen Ethylenoxidblock (B1), dann einen Propylenoxidblock (A) und abschließend wieder einen Ethylenoxidblock (B2) aufweisen, wobei solche Verbindungen bevorzugt sind, bei denen die Ethylenblöcke B1 und B2 jeweils von 3 bis 8, vorzugsweise 6 Ethylenoxid-Einheiten aufweisen und der Propylenoxidblock A von 2 bis 4, vorzugsweise 2 Propylenoxideinheiten aufweist. Bei diesen bevorzugten Verbindungen der Formel (I) ist es außerdem bevorzugt, wenn der Rest R² ein Wasserstoff ist. Es kann vorteilhaft sein, wenn die Reste R⁶ teilweise oder vollständig, vorzugsweise vollständig M⁺, insbesondere Alkalimetallkationen sind.

Es ist dem Fachmann geläufig, dass die Verbindungen der Formel (I) üblicherweise in Form einer Mischung dieser Verbindungen mit einer im Wesentlichen durch statistische Gesetze geregelten Verteilung vorliegen. Die angegeben Indizes stellen für den Fall des Vorliegens von Gemischen von Verbindungen der Formel (I) das jeweilige Zahlenmittel dar.

Die erfindungsgemäßen Verbindungen können auf verschiedene Weisen erhalten werden. Vorzugsweise werden die erfindungsgemäßen Verbindungen bzw. Gemische davon durch das nachfolgend beschriebene erfindungsgemäße Verfahren hergestellt.

Das erfindungsgemäße Verfahren zur Herstellung von erfindungsgemäßen Verbindungen oder Gemischen davon zeichnet sich dadurch aus, dass es die Schritte
A) Aktivierung eines OH-gruppenhaltigen Starters mit einem geeigneten sauren, basischen oder DMC-Katalysator (Doppelmetallcyanid-Katalysatoren),
B) Umsetzung der in Schritt A) erhaltenen Verbindungen mit aliphatischen und/oder aromatischen Alkylenoxiden, wobei die aliphatischen und/oder aromatischen Alkylenoxide in solchen molaren Mengen eingesetzt werden, dass die in Formel (I) angegebenen Indizes a, b, c und d, insbesondere die in den bevorzugte Ausführungsformen als Indizes a bis d beschriebenen, erhalten werden,
C) optional Umsetzung der in Schritt B) erhaltenen Verbindung mit einer phosphorsäureesterbildenden Phosphorverbindung und
D) gegebenenfalls Umsetzung der in Schritt C) erhaltenen Verbindung mit einem Neutralisationsmittel, enthält.

Es kann vorteilhaft sein, wenn zwischen den Schritten B) und C) ein Neutralisationsschritt E) durchgeführt wird.

### Schritt A

Als Katalysatoren können alle aus dem Stand der Technik bekannten Katalysatoren eingesetzt werden.

Als saure Katalysatoren können z. B. die DE 10 2004 007561 beschriebenen sauren Katalysatoren verwendet werden. Bevorzugt werden als saure Katalysatoren Halogenverbindungen der Elemente der Hauptgruppen IIIA und IVA des Periodensystems der Elemente, insbesondere der Elemente B, Al und Sn, eingesetzt. Besonders bevorzugt werden als saure Katalysatoren HBF₄, BF₃, AlCl₃ oder SnCl₄ eingesetzt.

Bevorzugt einsetzbare basische Katalysatoren sind z. B. Alkalihydroxide und Alkalimethylate, wie z. B. Kaliumhydroxid bzw. Natriummethylat. Besonders bevorzugt wird Kaliummethylat als basischer Katalysator in Schritt A) eingesetzt.

Als DMC-Katalysatoren können z. B. die in DE 102007057146 und der dort zitierten Literatur beschriebenen DMC-Katalysatoren eingesetzt werden. Bevorzugt werden solche, DMC-Katalysatoren eingesetzt, die Zink und Kobalt aufweisen, bevorzugt solche, die Zinkhexacyanocobaltat(III) aufweisen. Vorzugsweise werden die in US 5,158,922, US 20030119663 oder WO 01/80994 beschriebenen DMC-Katalysatoren eingesetzt. Die eingesetzten DMC-Katalysatoren können amorph oder kristallin sein.

Im Reaktionsgemisch liegt die Katalysatorkonzentration, insbesondere die der DMC-Katalysatoren vorzugsweise bei > 0 bis 10000 wppm (Massen-ppm), bevorzugt bei > 0 bis 2500 wppm, besonders bevorzugt bei 0,1 bis 200 wppm und ganz besonders bevorzugt bei 30 bis 100 wppm. Diese Konzentration ist dabei bezogen auf die Gesamtmasse des Reaktionsgemischs.

Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension, vorzugsweise als Feststoff dosiert werden.

Besonders bevorzugt werden in Schritt A) basische Katalysatoren oder DMC-Katalysatoren, insbesondere die oben explizit genannten eingesetzt.

Als OH-gruppenhaltiger Starter (Startalkohol) werden vorzugsweise ein oder mehrere Cardanole eingesetzt. Bei den Cardanolen handelt es sich vorzugsweise um solche, die durch Decarboxylierung von Anacardsäure, einem aus der Schale der Cashewnuß gewinnbarem Gemisch von (Z,Z)-6-(Pentadecanyl)salicylsäuren, mit 0 bis 3 Doppelbindungen in der Seitenkette, erhältlich sind. Besonders bevorzugte Cardanole sind solche, bei denen der Pentadecanyl-Rest im Zahlenmittel zu 35 bis 45 mol-%, vorzugsweise zu ca. 42 mol-% dreifach ungesättigt, zu 30 bis 40 mol-%, vorzugsweise zu ca. 34 mol-% zweifach ungesättigt, zu 15 bis 25 mol-%, vorzugsweise zu ca. 22 mol-% einfach ungesättigt, und zu 0 bis 5 mol-%, vorzugsweise zu ca. 2 mol-% gesättigt ist.

### Schritt B):

Der Schritt B) kann in an sich bekannter Weise wie im Stand der Technik beschrieben durchgeführt werden. Bevorzugt wird der Schritt B) z. B. wie in US 3,427,256, US 3,427,334, US 3,427,335, US 3,278,457, US 3,278,458, US 3,278,459, US 5,470,813 oder US 5,482,908 beschrieben durchgeführt.

Der Schritt B) wird vorzugsweise bei einer Temperatur von 90 bis 200 °C, bevorzugt 100 bis 150 °C und besonders bevorzugt von ca. 120 °C durchgeführt. Der Druck, bei dem Schritt B) vorzugsweise durchgeführt wird, beträgt vorzugsweise von 101325 bis 1013250 Pa, bevorzugt von 401325 bis 801325 Pa und besonders bevorzugt nicht mehr als 601325 Pa.

Der Schritt B) kann in Gegenwart eines nicht reaktiven Lösemittels wie z. B. Toluol, Xylol, Cyclohexan, Tetrahydrofuran oder Ethylenglykoldimethylether oder in Masse erfolgen. Vorzugsweise erfolgt die Umsetzung gemäß Schritt B) in Masse.

Es kann vorteilhaft sein, wenn die Umsetzung der verschiedenen aliphatischen und/oder aromatischen Alkylenoxide nacheinander erfolgt. Auf diese Weise lässt sich auf einfache Art der blockweise Aufbau steuern.

### Schritt C)

Schritt C) kann in Masse oder in Gegenwart eines Lösemittels durchgeführt werden. Als Lösemittel können insbesondere aprotische organische Lösemittel, wie z. B. Kohlenwasserstoffe eingesetzt werden. Bevorzugt wird Toluol als Lösemittel eingesetzt. Vorzugsweise wird Schritt C) in Masse durchgeführt.

In Schritt C) wird als Phosphorverbindung vorzugsweise eine Phosphorverbindung ausgewählt aus Phosphorsäure, Phosphorylchlorid und Polyphosphorsäure (P₂O₅ gelöst in H₃PO₄), bevorzugt Phosphorylchlorid oder Polyphosphorsäure (P₂O₅ gelöst in H₃PO₄) und besonders bevorzugt Polyphosphorsäure (P₂O₅ gelöst in H₃PO₄) eingesetzt. Eine geeignete Polyphosphorsäure ist z. B. die mit CAS-No. 8017-16-1 bezeichnete Polyphosphorsäure mit 84 Gew.-% Gehalt an P₂O₅ gelöst in H₃PO₄ der Firma Clariant.

Die Polyphosphorsäure wir vorzugsweise in solchen Mengen zugesetzt, dass das molare Verhältnis von OH-Gruppen des in Schritt B) erhaltenen Polyethers zu Polyphosphorsäure berechnet als P₂O₅ von 1 zu 0,1 bis 1 zu 2, vorzugsweise von 1 zu 0,2 bis 1 zu 1 und bevorzugt von 1 zu 0,5 beträgt.

Der Schritt C) wird vorzugsweise bei einer Temperatur von 40 bis 150 °C, bevorzugt 55 bis 125 °C und besonders bevorzugt von 70 bis 110 °C durchgeführt. Der Druck, bei dem Schritt C) vorzugsweise durchgeführt wird, beträgt 101325 Pa.

### Schritt D)

Als Neutralisationsmittel können in Schritt D) insbesondere Alkalihydroxide eingesetzt werden. Vorzugsweise wird als Neutralisationsmittel in Schritt D) Kaliumhydroxid, vorzugsweise in Form einer wässrigen Lösung eingesetzt. Besonders bevorzugt wird in Schritt D) eine wässrige, 20 bis 30 gew.-%ige Kalilauge eingesetzt.

Vorzugsweise wird in Schritt D) soviel an Neutralisationsmittel zugegeben, dass der pH-Wert der behandelten Reaktionsmischung von 8 bis 9, vorzugsweise 8,5 beträgt.

Die Bestimmung des pH-Werts erfolgt vorzugsweise in Anlehnung an DIN EN 1262 unter Verwendung eines pH-Messgeräts mit Glaselektrode bei einer Temperatur von 20 bis 25 °C. Eine Minute nach Erreichen eines konstanten Messwertes wird dieser abgelesen und der pH-Wert auf eine Stelle nach dem Komma dokumentiert.

Der Schritt D) wird vorzugsweise bei einer Temperatur von 20 bis 90 °C, bevorzugt 40 bis 80 °C und besonders bevorzugt von 50 bis 70 °C durchgeführt. Der Druck, bei dem Schritt D) vorzugsweise durchgeführt wird, beträgt 101325 Pa.

### Schritt E)

Je nach in Schritt A) bzw. B) verwendetem Katalysator kann es vorteilhaft bzw. notwendig sein, nach Schritt B) einen Neutralisationsschritt E) durchzuführen.

Wird als Katalysator in Schritt A) bzw. B) ein basischer Katalysator eingesetzt, so ist das Neutralisationsmittel vorzugsweise eine Säure wie Milch- oder Phosphorsäure, bevorzugt Milchsäure oder eine wässrige Lösung davon.

Wird als Katalysator in Schritt A) bzw. B) ein saurer Katalysator eingesetzt, so ist das Neutralisationsmittel vorzugsweise eine Base, bevorzugt Alkalihydroxid oder Alkalicarbonat, besonders bevorzugt NaOH oder eine wässrige Lösung bzw. Suspension davon. Werden wässrige Lösungen des Neutralisationsmittels eingesetzt, so kann es vorteilhaft sein, vor der Durchführung des Schrittes C) einen Verfahrensschritt durchzuführen, bei dem Wasser abgetrennt wird. Die Abtrennung des Wassers kann z. B. durch Destillation erfolgen.

Mittels der erfindungsgemäßen Verbindungen sind erfindungsgemäße Zusammensetzungen zugänglich, die mindestens eine der erfindungsgemäßen Verbindungen enthalten. Neben der mindestens einen erfindungsgemäßen Verbindung der Formel (I) können die erfindungsgemäßen Zusammensetzungen Wasser aufweisen oder aus diesen Komponenten bestehen. Weist die erfindungsgemäße Zusammensetzung Wasser und Verbindungen der Formel (I) auf, so beträgt der Anteil an Verbindungen der Formel (I) vorzugsweise von 0,1 bis 99,9 Gew.-%, bevorzugt 5 bis 60 Gew.-%, besonders bevorzugt von 10 bis 30 Gew.-% und der Anteil an Wasser vorzugsweise von 0,1 bis 99,9 Gew.-%, bevorzugt von 40 Gew.-% bis 95 Gew.-% und besonders bevorzugt von 70 Gew.-% bis 90 Gew.-%.

Die erfindungsgemäße Zusammensetzung kann außerdem ein oder mehrere Hilfsstoffe wie beispielsweise Entschäumer, Entlüfter oder Konservierungsmittel und ein oder mehrere Feststoffe, insbesondere Pigmente enthalten. Ein Feststoff im Sinne der vorliegenden Erfindung kann prinzipiell jedes bei einer Temperatur von 20 °C und einem Druck von 101325 Pa feste organische oder anorganische Material sein. Der Anteil der erfindungsgemäßen Verbindungen der Formel (I) bezogen auf das Gewicht der Feststoffe, vorzugsweise der Pigmente beträgt vorzugsweise von 2,0 bis 200 Gew.-%, bevorzugt 5,0 bis 100 Gew.-%, besonders bevorzugt von 10 bis 30 Gew.-%.

Beispiele für Feststoffe, die in der erfindungsgemäßen Zusammensetzung enthalten sein können, sind z. B. Pigmente, Füllstoffe, Farbstoffe, optische Aufheller, keramische Materialien, magnetische Materialien, nanodisperse Feststoffe, Metalle, Biozide, Agrochemikalien und Pharmaka, welche als Dispersionen angewendet werden.

Bevorzugte Feststoffe sind Pigmente, wie sie zum Beispiel im "Colour Index, Third Edition, Volume 3; The Society of Dyers and Colorists (1982)" und den nachfolgenden, überarbeiteten Auflagen genannt werden.

Bevorzugte Beispiele für Pigmente sind anorganische Pigmente, wie Ruße, Titandioxide, Zinkoxide, Preußischblau, Eisenoxide, Cadmiumsulfide, Chrompigmente, wie zum Beispiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt.

Bevorzugte Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phtalocyaninpigmente. Weitere Beispiele für organische Pigmente werden in dem Buch "W. Herbst, K.Hunger, Industrial Organic Pigments, VCH, Weinheim (1993)" genannt.

Weitere bevorzugte Feststoffe sind Füllstoffe, wie zum Beispiel Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen und Biozide, Agrochemikalien und Pharmaka, wie zum Beispiel Fungizide.

In den erfindungsgemäßen feststoff- bzw. pigmenthaltigen Zusammensetzungen können die Verbindungen er Formel (I) allein oder in Kombination eingesetzt werden. Zur Herstellung dieser Zusammensetzungen können die erfindungsgemäßen Verbindungen der Formel (I) entweder vorab mit den zu dispergierenden Feststoffen (Pigmenten) vermischt oder direkt in einem wässrigen Dispergiermedium vor oder gleichzeitig mit der Zugabe der Feststoffe (Pigmente) und weiterer etwaiger Feststoffe gelöst werden. Neben den genannten Komponenten können die erfindungsgemäßen Zusammensetzungen weitere Additive und Hilfsstoffe, insbesondere andere an sich bekannte pigmentbenetzende Additiven und/oder Harze aufweisen.

Die erfindungsgemäßen Verbindungen der Formel (I) können als Additive, vorzugsweise als Pigmentnetz- und/oder Dispergiermittel, verwendet werden. Bevorzugt werden die erfindungsgemäßen Verbindungen der Formel (I) als Additive für Pigmentpasten, Lacke, Farben oder Druckfarben, vorzugsweise als Additive für entsprechende wässrige (wasserhaltige) Produkte verwendet.

Die erfindungsgemäßen Zusammensetzungen können zur Herstellung von Farben, Lacken und Druckfarben/Drucklacken, von bindemittelhaltigen oder bindemittelfreien Pigmentpasten, oder Beschichtungsstoffen oder als Farben, Lacke und Druckfarben/Drucklacke, bindemittelhaltige oder bindemittelfreie Pigmentpasten oder Beschichtungsstoffe verwendet werden. Vorzugsweise werden die erfindungsgemäßen Zusammensetzungen zur Herstellung von entsprechenden wässrigen bzw. wasserhaltigen Produkten bzw. als entsprechende wässrige bzw. wasserhaltige Produkte verwendet.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1a: Synthese von Polyalkylenoxid PAO1

303 g (1 mol) Cardanol und 2,7 g (0,05 mol) Natriummethylat wurden in einen Reaktor gegeben. Nach sorgfältiger Spülung mit Reinststickstoff wurde auf 125 °C erhitzt und 240 g (2 mol) Styroloxid innerhalb einer Stunde zugegeben. Nach weiteren 2 Stunden war die Anlagerung des Styroloxid beendet, erkennbar an einem Restgehalt an Styroloxid, der laut GC bei < 0,1 Gew.-% lag. Anschließend wurden 484 g (11 mol) Ethylenoxid so schnell in den Reaktor dosiert, dass die Innentemperatur 125 °C und der Druck 6 bar nicht überschritt. Nach vollständiger Einleitung des Ethylenoxids wurde die Temperatur so lange auf 125 °C gehalten, bis ein konstanter Manometerdruck das Ende der Nachreaktion anzeigte. Schließlich wurden bei 80 °C bis 90 °C die nicht um**gesetzten Restmonomere im Vakuum entfernt. Das erhaltene Produkt wurde mit Hilfe** von Phosphorsäure neutralisiert und das Wasser durch Destillation, das entstandene Natriumphosphat durch Filtration zusammen mit einem Filterhilfsmittel entfernt.

### Beispiele 1b bis 1f: Synthese von Polyalkylenoxid PAO2 bis PAO6

In analoger Weise zu Beispiel 1a wurden die Verbindungen PAO2 bis PAO6 hergestellt.

Die eingesetzten molaren Mengen der in den Beispielen 1a bis 1f eingesetzten Komponenten können Tabelle 1 a entnommen werden (Angaben in mol).

**Tabelle 1 a: Mengen der in den Beispielen 1a bis 1f eingesetzte Rohstoffe (Angaben in mol).**

| Beispiel | Verb. | Cardanol | Styroloxid | Ethylenoxid | Propylenoxid | Butylenoxid | Aggregatzustand* |
|---|---|---|---|---|---|---|---|
| 1a | PAO1 | 1 | 2 | 11 | 0 | 0 | flüssig |
| 1b | PAO2 | 1 | 1 | 9 | 0 | 0 | flüssig |
| 1c | PAO3 | 1 | 2 | 13 | 0 | 0 | flüssig |
| 1d | PAO4 | 1 | 0 | 10 | 0 | 0 | flüssig |
| 1e | PAO5 | 1 | 0 | 20 | 3 | 0 | flüssig |
| 1f | PAO6 | 1 | 0 | 20 | 3 | 1 | flüssig |

| | | | | | | | |
|---|---|---|---|---|---|---|---|
| *Bei einer Temperatur von 20 °C und einem Druck von 101325 Pa | | | | | | | |

### Beispiel 2a: Synthese des Phosphorsäureesters A1

1 OH-Äquivalent des Polyalkylenoxids PAO 1 wurde im Reaktor vorgelegt und auf 110 °C erhitzt. Durch Anlegen eines Vakuums wurden alle flüchtigen Anteile, insbesondere evtl. im Produkt vorhandenes Wasser, aus dem Reaktionsraum destillativ entfernt. Nach dem Belüften mit Stickstoff wurde auf 80 °C temperiert und Polyphosphorsäure (CAS-No. 8017-16-1; Polyphosphorsäure 84%, Gehalt als P₂O₅ gelöst in H₃PO₄ berechnet, Hersteller Fa.Clariant) entsprechend dem OH-Äquivalent hinzugefügt. Nach 2 Stunden ist die Reaktion abgeschlossen, im ¹H-NMR Spektrum war keine aliphatische Hydroxylgruppe mehr nachweisbar.

### Beispiele 2b bis 2h: Synthese der Phosphorsäureester A2 bis A8

Die Phosphorsäureester A2 bis A8 wurden in analoger Weise zu Beispiel 2a hergestellt. Bei den Beispielen 2 g und 2h (Verbindungen A7 und A8) erfolgte keine Veresterung. In Tabelle 1b sind die erhaltenen Phosphorsäureester näher bestimmt, wobei x, y, z und R⁴ die für Formel (I) angegeben Bedeutung haben.

**Tabelle 1 b: In den Beispielen 2a bis 2h erhaltene Produkte auf Basis der eingesetzten Polyether gemäß Beispiel 1**

| Verbindung | Polyether | x | y | z | R⁴ | Aggregatzustand* |
|---|---|---|---|---|---|---|
| A1 | PAO1 | 1 | 1 | 0 | - | flüssig |
| A2 | PAO2 | 1 | 1 | 0 | - | flüssig |
| A3 | PAO3 | 1 | 1 | 0 | - | flüssig |
| A4 | PAO4 | 1 | 1 | 0 | - | flüssig |
| A5 | PAO5 | 1 | 1 | 0 | - | flüssig |
| A6 | PAO6 | 1 | 1 | 0 | - | flüssig |
| A7 | PAO4 | 1 | 0 | 1 | H | flüssig |
| A8 | PAO5 | 1 | 0 | 1 | H | flüssig |

| | | | | | | |
|---|---|---|---|---|---|---|
| *Bei einer Temperatur von 20 °C und einem Druck von 101325 Pa | | | | | | |

### Beispiel 3: Test der Dispergiereigenschaften

Für die nachfolgend beschriebenen anwendungstechnischen Untersuchungen wurden der Verbindungen A1 bis A8 mit verdünnter wässriger 25 Gew.-%iger Kalilauge auf einen ein Gesamtfestkörpergehalt von 30 Gew.-% verdünnt und dieses Gemisch als Dispergieradditiv verwendet. Als Feststoffe wurden folgende handelsübliche Pigmente ausgewählt:
- Heliogenblau L7101 F (BASF SE)
- Permanentrot FGR 70 (Clariant)
- Bayferrox 120M (Lanxess)

### Beispiel 3.1: Herstellung von Pigmentpasten:

Die Rezepturbestandteile wurden gemäß den in Tabelle 2 angegebenen Rezepturen in 250 ml Schraubdeckelgläser eingewogen und mit Glasperlen (200 g Glasperlen auf 100 g Mischgut) versetzt. Die verschlossenen Gläser wurden anschließend in einem Skandex Mischer (Typ: DAS H 200-K der Firma Lau GmbH) für 2 h gerüttelt. Anschließend wurden die Glasperlen mit Hilfe eines Siebes (E-D-Schnellsieb 400 µ, Baumwoll-Gewebe, mittel, der Fa. Erich Drehkopf GmbH). von der Pigmentpaste getrennt.

**Tabelle 2: Zusammensetzungen der Pigmentpasten**

| | Heliogenblau L71 01 F | Permanentrot FGR 70 | Bayferrox 120 M |
|---|---|---|---|
| H₂O, demin. | 12,7 g | 12,3 g | 18,0 g |
| Dispergieradditiv A1-A8^{a)} | 49,3 g | 46,7 g | 21,0 g |
| Foamex 8050 ^{b)} | 1,0 g | 1,0 g | 1,0 g |
| Pigment | 37,0 g | 40,0 g | 60,0 g |
| Gesamtsumme | 100 g | 100,0 g | 100 g |

| | | | |
|---|---|---|---|
| a) Wirkstoffgehalt 30 Gew.-%. b) Entschäumer, Handelsname der Fa. Evonik Goldschmidt GmbH | | | |

Für diese Farbpasten wurden die Viskositäten bei 23 °C und bei jeweils 300 und 1000 reziproken Sekunden (Rotationsviskosimeter Anton Paar Physica MCR 301 mit Messkegel CP 50-2; 5 Messpunkte pro Schergeschwindigkeit mit anschließender Mittelwertbildung; 10 s Vorscherung pro Messpunkt) sofort und nach vierwöchiger Lagerung bei 50 °C der Pigmentpasten gemäß Beispiel 3.1 bestimmt. Die Ergebnisse dieses Tests sind in den Tabellen 3a bis 3c angegeben.

**Tabelle 3a: Testergebnisse der Pigmentpasten basierend auf dem Pigment Heliogenblau L7101 F.**

| Heliogenblau L7101 F | Viskosität mPas sofort | | Viskosität mPas 4 Wochen 50 °C | |
|---|---|---|---|---|
| | 300 s⁻¹ | 1000 s⁻¹ | 300 s⁻¹ | 1000 s⁻¹ |
| A1 | 752 | 418 | 792 | 467 |
| A2 | 710 | 422 | 812 | 479 |
| A3 | 793 | 519 | 893 | 551 |
| A4 | 821 | 436 | 921 | 482 |
| A5 | 756 | 534 | 868 | 574 |
| A6 | 828 | 415 | 928 | 457 |
| A7 | 710 | 425 | 836 | 471 |
| A8 | 723 | 437 | 853 | 471 |

**Tabelle 3b: Testergebnisse der Pigmentpasten basierend auf dem Pigment Permanentrot FGR 70.**

| Permanentrot FGR 70 | Viskosität mPas sofort | | Viskosität mPas 4 Wochen 50 °C | |
|---|---|---|---|---|
| | 300 s⁻¹ | 1000 s⁻¹ | 300 s⁻¹ | 1000 s⁻¹ |
| A1 | 345 | 289 | 411 | 315 |
| A2 | 382 | 278 | 443 | 332 |
| A3 | 341 | 275 | 373 | 308 |
| A4 | 365 | 259 | 365 | 297 |
| A5 | 377 | 244 | 377 | 291 |
| A6 | 305 | 289 | 305 | 334 |
| A7 | 321 | 299 | 321 | 364 |
| A8 | 319 | 279 | 319 | 326 |

**Tabelle 3c: Testergebnisse der Pigmentpasten basierend auf dem Pigment Bayferrox 120 M.**

| Bayferrox 120 M | Viskosität mPas sofort | | Viskosität mPas 4 Wochen 50 °C | |
|---|---|---|---|---|
| | 300 s⁻¹ | 1000 s⁻¹ | 300 s⁻¹ | 1000 s⁻¹ |
| A1 | 337 | 268 | 402 | 353 |
| A2 | 357 | 237 | 454 | 324 |
| A3 | 341 | 241 | 423 | 301 |
| A4 | 343 | 243 | 489 | 387 |
| A5 | 352 | 252 | 495 | 375 |
| A6 | 321 | 221 | 452 | 302 |
| A7 | 352 | 252 | 469 | 324 |
| A8 | 321 | 221 | 498 | 331 |

### Beispiel 3.2: Tönung eines wässrigen Weißlacks:

Es wurde ein wässriger Weißlack auf Reinacrylatdispersionsbasis (Neocryl XK 90, Fa.

DSM NeoResins) verwendet. Die Rezepturbestandteile für den Weißlack wurden gemäß der folgenden Rezeptur aus Tabelle 4 mit 200 g Glasperlen versetzt und anschließend in einem Skandex Mischer (Typ: DAS H 200-K der Firma Lau GmbH) für 1 h gerüttelt. Anschließend wurden die Glasperlen mit Hilfe eines Siebes abgetrennt (E-D-Schnellsieb 400 p, Baumwoll-Gewebe, mittel, der Fa. Erich Drehkopf GmbH).

**Tabelle 4: Zusammensetzung des Prüflacks**

| | Neocryl XK 90 |
|---|---|
| H₂O, demin. | 3,9 g |
| Tego Dispers 755 W^{a)} | 9,0 g |
| Foamex 810 ^{b)} | 0,5 g |
| Parmetol K 40 c) | 0,1 g |
| Aerosil 200 ^{d)} | 0,1 g |
| Neocryl XK 90 ^{e)}/ Texanol 97: 3 | 53,4 g |
| Tego Wet KL 245 ^{f)} | 0,5 g |
| Visko Plus 3000 ^{g)} | 1,0 g |
| Kronos 2310 ^{h)} | 31,5 g |
| Gesamt | 100,0 g |

| | |
|---|---|
| Dispergiermittel, Fa. Evonik Goldschmidt GmbH b) Entschäumer, Fa. Evonik Goldschmidt GmbH c) Konservierungsmittel Fa. Schülke & Mayr d) Tixotropiermittel, Fa. Evonik Degussa GmbH e) Polyacrylatdispersion, Fa. DSM NeoResins f) Substratnetzmittel, Fa. Evonik Goldschmidt GmbH g) Rheologieadditiv, Fa. Evonik Goldschmidt GmbH h) Weißpigment (Titandioxid), Fa. Kronos | |

Zur Herstellung abgetönter Lacke wurden je 1 g Pigmentpaste gemäß Beispiel 3.1 und 20 g Weißlack gemeinsam eingewogen. Das Gemisch wurde 1 min im Speedmixer (Typ: DAC 150 FVZ der Firma Hauschild & Co. KG) bei 2500 U/min homogenisiert. Die so hergestellten abgetönten Prüflacke wurden mit einem Spiralrakel (100 µm) auf einer Kontrastkarte (Leneta^{®}) aufgerakelt und bei Raumtemperatur getrocknet. Die Farbmessung der Lackabmischung (100µm-Schichtdicke auf Leneta^{®}-Kontrastkarte) erfolgte mit einem Gerät der Firma X-Rite (Typ: X-Rite SP 60). Nach 5 min Trocknung wurde ein Rub-Out Test durchgeführt, die farbmetrischen Werte sind als Bestandteile des CIE L*a*b* - Farbmodell wiedergegeben (DIN 6174: "Farbmetrische Bestimmung von Farbmaßzahlen und Farbabständen im angenähert gleichförmigen CIELAB-Farbenraum").

Die Ergebnisse der Farbmessungen sind in den Tabellen 5a bis 5c zusammengefasst.

**Tabelle 5a: Ergebnisse der Farbmessungen für mit Heliogenblau 7101F Pigmentpaste abgetönten Prüflack.**

| Dispergieradditiv | Farbstärke F | b* | delta E |
|---|---|---|---|
| A1 | 61 | - 34 | 0,8 |
| A2 | 60 | - 35 | 0, |
| A3 | 62 | - 32 | 1,3 |
| A4 | 61 | - 39 | 1,7 |
| A5 | 61 | - 36 | 1,1 |
| A6 | 62 | - 39 | 1,2 |
| A7 | 60 | - 37 | 1,6 |
| A8 | 59 | - 36 | 1,7 |

**Tabelle 5b Ergebnisse der Farbmessungen für mit Permanentrot FGR 70 Pigment-paste abgetönten Prüflack.**

| Dispergieradditiv | Farbstärke F | a* | delta E |
|---|---|---|---|
| A1 | 38 | 33 | 0,9 |
| A2 | 39 | 32 | 0,8 |
| A3 | 37 | 34 | 0,6 |
| A4 | 40 | 30 | 0,7 |
| A5 | 37 | 31 | 0,6 |
| A6 | 38 | 34 | 0,8 |
| A7 | 39 | 33 | 0,7 |
| A8 | 37 | 31 | 0,9 |

**Tabelle 5c Ergebnisse der Farbmessungen für mit Bayferrrox 120 M Pigmentpaste abgetönten Prüflack.**

| Dispergieradditiv | Farbstärke F | a* | delta E |
|---|---|---|---|
| A1 | 55 | 16 | 0,8 |
| A2 | 59 | 18 | 0,7 |
| A3 | 54 | 15 | 0,9 |
| A4 | 57 | 17 | 0,7 |
| A5 | 58 | 17 | 0,7 |
| A6 | 59 | 18 | 0,8 |
| A7 | 57 | 16 | 0,9 |
| A8 | 55 | 18 | 0,8 |

Die in den Tabellen 3a bis 3c und 5a bis 5c dargestellten Ergebnisse zeigen, dass die erfindungsgemäßen Verbindungen zur Herstellung von Pigmentpasten und zum Abtönen von weißen Basisfarben geeignet sind.

### Beispiel 4: Anwendungstechnische Tests

Für die nachfolgend beschriebenen anwendungstechnischen Untersuchungen wurden die Ester A1 bis A8 mit verdünnter wässriger 25 Gew.-%iger Kalilauge auf einen ein Gesamtfestkörpergehalt von 30 Gew.-% verdünnt und dieses Gemisch als Dispergieradditiv verwendet. Als Vergleichsadditive wurden Tego Dispers 715 W (Lösung eines Natriumpolyacrylat, Fa. Evonik Tego GmbH), nachfolgend als B1 bezeichnet, Tego Dispers 740 W (Fettsäureethoxylat, Fa. Evonik Tego GmbH), nachfolgend als B2 bezeichnet, und Hydropalat 34 (hydrophobes Ammonium Copolymer, Fa. Cognis), nachfolgend als B3 bezeichnet, verwendet.

### Beispiel 4.1: Schneckenspuren

Der Test auf die Bildung von Schneckenspuren erfolgte, in dem die Farbe als Weißfarbe oder als abgetönte Farbe mit einem 300 µm Kastenrakel auf eine Glasplatte aufgezogen wurde. Dieser Aufzug wurde 24 Stunden bei 50 °C getrocknet. Danach wurden 50 ml Wasser mit 2,5 ml/min tropfenweise in einem Winkel von 45 °C mit einer Dosieranlage (Schlauchpumpe SP 041, Otto Huber GmbH, Böttingen) auf die Beschichtung gegeben. Als Feststoff wurden für die Beispiele 4.1.1 und 4.1.2 handelsübliche Weißpigmente (Kronos 2310, Kronos und Hombitan R 611, Sachtleben) ausgewählt. Die Bildung von Glanzstellen (Schneckenspuren) wurde anschließend optisch beurteilt.

### Beispiel 4.1.1: Schneckenspuren bei einer Silikonharzfassadenfarbe

Die Rezepturbestandteile 1 bis 13 gemäß der in Tabelle 6 angegebenen Rezeptur wurden in den 1-I-Topf eines Dissolvers (Dispermat CV2-SiP, VMA Getzmann GmbH, D-51580 Reichshof) eingewogen. Danach wurde für 30 Minuten bei 2500 Umdrehungen pro Minute mit 300 g Glasperlen dispergiert. Nach der Dispergierung wurden die Rezepturbestandteile 14 bis 17 für 15 Minuten bei 2500 Umdrehungen pro Minute eingerührt. Die Gesamtmasse der Rezepturbestandteile 1 bis 17 betrug 300 g. Anschließend wurden die Glasperlen mit Hilfe eines Siebes (E-D-Schnellsieb 400 p, Baumwoll-Gewebe, mittel, der Fa. Erich Drehkopf GmbH) von der Fassadenfarbe getrennt.

**Tabelle 6: Zusammensetzung der Silikonharzfassadenfarbe**

| Bestandteil | Rohstoff | Gew.-% |
|---|---|---|
| 1 | Wasser | 26,73 |
| 2 | Walocel XM 6000 PV 1 | 0,31 |
| 3 | TEGO® Foamex 855 | 0,21 |
| 4 | Acticide MBS | 0,16 |
| 5 | Calgon N | 0,05 |
| 6 | Dispergieradditv^{*)} | 0,12 |
| 7 | AMP 90 | 0,10 |
| 8 | Kronos 2310 | 12,98 |
| 9 | Socal P 3 | 10,38 |
| 10 | Omyacarb 5 | 15,58 |
| 11 | Omyacarb 2 | 10,38 |
| 12 | Glimmer Mica TG | 3,12 |
| 13 | Sipernat® 820 A | 2,08 |
| 14 | Phobe 1650 | 3,63 |
| 15 | Dowanol DPnB | 1,04 |
| 16 | Mowilith LDM 7717 | 12,46 |
| 17 | Rheolate 278 | 0,67 |
| | Gesamt | 100.00 |

| | | |
|---|---|---|
| ^{*)} Einsatzmenge des Dispergieraddtivs auf Wirkstoff bezogen | | |

Das Ergebnis der optischen Beurteilung des Beispiel 4.1.1 kann Tabelle 7 entnommen werden.

**Tabelle 7: Ergebnis des Beispiels 4.1.1**

| Dispergieradditiv | Schneckenspuren |
|---|---|
| A1 | keine Spuren |
| A2 | |
| A3 | |
| A4 | |
| A5 | |
| A6 | |
| A7 | |
| A8 | |
| B1 | erkennbare Spuren |
| B2 | erkennbare Spuren |
| B3 | erkennbare Spuren |

### Beispiel 4.1.2: Schneckenspuren bei einer Außendispersionsfarbe

Die Rezepturbestandteile 1 bis 14 wurden gemäß der in Tabelle 8 angegebenen Rezeptur in den 1-I-Topf eines Dissolvers (Dispermat CV2-SiP, VMA Getzmann GmbH, D-51580 Reichshof) eingewogen. Danach wurde für 30 Minuten bei 2500 Umdrehungen pro Minute mit 300 g Glasperlen dispergiert. Nach der Dispergierung wurde der Rezepturbestandteil 15 bei 2500 Umdrehungen pro Minute eingerührt und die Mischung für 15 Minuten weiter gerührt. Die Gesamtmasse der Rezepturbestandteile 1 bis 15 betrug 300 g. Anschließend wurden die Glasperlen mit Hilfe eines Siebes (E-D-Schnellsieb 400 µ, Baumwoll-Gewebe, mittel, der Fa. Erich Drehkopf GmbH) von der Außendispersionsfarbe getrennt.

**Tabelle 8: Zusammensetzung Außendispersionsfarbe**

| Nr | Rohstoffe | Gew.-% |
|---|---|---|
| 1 | Wasser | 15,34 |
| 2 | Acticide MBS | 0,20 |
| 3 | Dispergieradditiv^{*)} | 0,12 |
| 4 | Calgon N | 0,20 |
| 5 | TEGO^{®}Foamex 810 | 0,10 |
| 6 | Hombitan R 611 | 22,27 |
| 7 | Omyacarb 5 GU | 14,85 |
| 8 | China Clay Pole Star 200 P | 4,95 |
| 9 | Micro Talc AT 1 | 2,48 |
| 10 | Tylose MH 30000 YP2 | 0,25 |
| 11 | Butyldiglykolacetat | 0,74 |
| 12 | Testbenzin | 0,74 |
| 13 | Ammoniak (25%ig) | 0,20 |
| 14 | TEGO^{®} Foamex 810 | 0,15 |
| 15 | Mowilith LDM 7717 | 37,13 |
| | Gesamt | 100.00 |

| | | |
|---|---|---|
| ^{*)} Einsatzmenge des Dispergieraddtivs auf Wirkstoff bezogen | | |

Das Ergebnis der optischen Beurteilung des Beispiel 4.1.2 kann Tabelle 9 entnommen werden.

**Tabelle 9: Ergebnis des Beispiels 4.1.2**

| Dispergieradditiv | Schneckenspuren |
|---|---|
| A1 | keine Spuren |
| A2 | |
| A3 | |
| A4 | |
| A5 | |
| A6 | |
| A7 | |
| A8 | |
| B1 | erkennbare Spuren |
| B2 | erkennbare Spuren |
| B3 | erkennbare Spuren |

An Hand der in den Tabellen 7 und 9 wiedergegebenen Testergebnisse ist zu erkennen, dass durch die Verwendung von erfindungsgemäßen Verbindungen die Bildung von Schneckenspuren unterbunden werden kann.

### Beispiel 4.2: Wasserquellbarkeit

Es wurde die wässrige Außendispersionsfarbe aus dem Beispiel 4.1.2, Tabelle 8 verwendet. Die Farbe wurde mit einem 300 µm Kastenrakel auf eine Glasplatte aufgebracht. Danach erfolgte eine intensivierte Trocknung für 24 h bei 50 °C. Anschließend wurden die Rakelaufzüge 24 Stunden bei Raumtemperatur (23 °C) gelagert, danach wurden 0,3 ml Wasser mittels einer Pipette auf den getrockneten Lackfilm aufgebracht. Der Wassertropfen wurde mit einem Ochsenauge abgedeckt und die Zeit bis zu einer visuell wahrnehmbaren Wasserquellung gemessen. Die Ergebnisse dieses Tests sind in Tabelle 10 wiedergegeben.

**Tabelle 10: Ergebnis des Beispiels 4.2**

| Dispergieradditiv | Wasserquellbarkeit |
|---|---|
| | 24 h RT |
| A1 | |
| A2 | |
| A3 | |
| A4 | nach 40 min gequollen |
| A5 | |
| A6 | |
| A7 | |
| A8 | |
| B1 | |
| B2 | nach 30 min gequollen |
| B3 | |

An Hand der in der Tabelle 10 wiedergegebenen Testergebnisse ist zu erkennen, dass durch die durch die Verwendung von erfindungsgemäßen Verbindungen die Wasserquellbarkeit verlangsamt werden kann.

### Beispiel 4.3: Nassabriebbeständigkeit

Es wurde die wässrige Außendispersionsfarbe aus dem Beispiel 4.1.2, Tabelle 8 verwendet. Die Farbe wurde mit einem 300 µm Kastenrakel auf schwarze Leneta Platten aufgebracht. Nach einer Trocknungszeit von 14 Tagen bei 40 °C wurde der Test auf Nassabriebbeständigkeit nach der Norm EN ISO 11998 durchgeführt. Die Ergebnisse dieses Tests sind in Tabelle 11 wiedergegeben.

**Tabelle 11: Ergebnis des Beispiels 4.3**

| Dispergieradditiv | Nassabrieb [µm] | Klasse |
|---|---|---|
| A1 | 3,9 | 1 |
| A2 | 3,6 | 1 |
| A3 | 3,7 | 1 |
| A4 | 4,1 | 1 |
| A5 | 4,0 | 1 |
| A6 | 3,9 | 1 |
| A7 | 2,8 | 1 |
| A8 | 3,1 | 1 |
| B1 | 6,7 | 2 |
| B2 | 5,2 | 2 |
| B3 | 5,3 | 2 |

An Hand der in der Tabelle 11 wiedergegebenen Testergebnisse ist zu erkennen, dass durch die Nassabriebbeständigkeit durch Einsatz der erfindungsgemäßen Verbindungen gegenüber dem Stand der Technik verbessert werden kann.

## Patentansprüche

1. Bei einer Temperatur von 20 °C und einem Druck von 101325 Pa flüssige Verbindungen der allgemeinen Formel (1) [R-O(SO)ₐ(EO)_{b}(CH₂CHCH₃O)_{c}(BO)_{d}]ₓ-[PO-(OH)₃₋ₓ]_{y}R⁴_{z} (I) oder flüssige Mischungen bestehend aus Verbindungen der Formel (I),
mit
R= 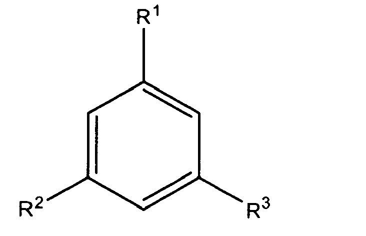
R¹ = Bindung zur Einheit -O(SO)ₐ(EO)_{b}(CH₂CHCH₃O)_{c}(BO)_{d}-
R² = gleich oder verschieden H oder -O(SO)ₐ(EO)_{b}(CH₂CHCH₃O)_{c}(BO)_{d}-[PO- (OH)_{2-x'}(R⁵)_{x'}]_{y'}-R⁴_{z'},
R³ = gleiche oder verschiedene gesättigte oder ungesättigter aliphatischer Kohlenwasserstoffrest mit 15 Kohlenstoffatomen und 25 bis 31 Wasserstoffatomen,
R⁴ = gleich oder verschieden H, M⁺ oder Alkyl mit 1 bis 3 C-Atomen,
R⁵ = organischer Rest,
R⁶ = gleich oder verschieden H oder M⁺,
M⁺ = Metall oder Halbmetallkation,
SO = Styroloxid,
EO = Ethylenoxid,
BO = Butylenoxid und
a = 0 bis 3,
b = 0 bis 100, vorzugsweise mindestens 1,
c = 0 bis 20,
d = 0 bis 3,
x = 1 bis 3,
y = 0 oder 1,
z = 0 oder 1,
y' = 0 oder 1,
z' = 0 oder 1 und
x' = 0 bis 2,
mit der Maßgabe, dass y + z = 1 ist, dass wenn z = 1 auch x = 1 ist, dass y' + z' = 1, dass wenn z' = 1 auch x' = 1 ist, dass wenn a, c und d = 0 sind b von 1 bis 12, bevorzugt von 6 bis 10 ist, dass wenn c oder d ungleich 0 ist einer der anderen Indizes a bis d ebenfalls ungleich 0 ist, und dass die Summe a + b + c + d größer 3 ist.

2. Verbindungen gemäß Anspruch 1, **dadurch gekennzeichnet, dass** R² = H, y = 1 und z = 0 ist.

3. Verbindungen gemäß Anspruch 1 oder 2, **dadurch gekennzeichnet, dass** die mit den Indizes a, b, c und/oder d bezeichneten Einheiten blockweise angeordnet sind.

4. Verbindungen gemäß einem der Ansprüche 1 bis 3, **dadurch gekennzeichnet, dass** die vom Rest R am weitesten entfernte Einheit, die eine Bindung zum Phosphor oder zu R⁴ aufweist, eine Ethylenoxideinheit ist.

5. Verfahren zur Herstellung von Verbindungen gemäß einem der Ansprüche 1 bis 4, **dadurch gekennzeichnet, dass** es die Schritte
A) Aktivierung eines OH-gruppenhaltigen Starters mit einem geeigneten sauren, basischen oder DMC-Katalysator
B) Umsetzung der in Schritt A) erhaltenen Verbindungen mit aliphatischen und/oder aromatischen Alkylenoxiden, wobei die aliphatischen und/oder aromatischen Alkylenoxide in solchen molaren Mengen eingesetzt werden, dass die in Formel (I) angegebenen Indizes a, b, c und d erhalten werden,
C) optional Umsetzung der in Schritt B) erhaltenen Verbindung mit einer phosphorsäureesterbildenden Phosphorverbindung und
D) gegebenenfalls Umsetzung der in Schritt C) erhaltenen Verbindung mit einem Neutralisationsmittel
enthält.

6. Verfahren nach Anspruch 5, **dadurch gekennzeichnet, dass** in Schritt B) die Umsetzung der verschiedenen aliphatischen und/oder aromatischen Alkylenoxide nacheinander erfolgt.

7. Verfahren nach Anspruch 5 oder 6, **dadurch gekennzeichnet, dass** Schritt C) durchgeführt und als Phosphorverbindung Polyphosphorsäure (P₂O₅ gelöst in H₃PO₄) eingesetzt wird.

8. Verfahren nach Anspruch 7, **dadurch gekennzeichnet, dass** pro mol OH-Gruppen 0,5 mol P₂O₅ eingesetzt wird.

9. Zusammensetzungen enthaltend mindestens eine Verbindung gemäß einem der Ansprüche 1 bis 4.

10. Zusammensetzungen nach Anspruch 9, **dadurch gekennzeichnet, dass** die Zusammensetzung mindesten eine Verbindung gemäß einem der Ansprüche 1 bis 4 sowie Wasser enthält oder aus diesen Komponenten besteht.

11. Zusammensetzung nach Anspruch 9 oder 10, **dadurch gekennzeichnet, dass** die Zusammensetzung mindestens ein Pigment enthält.

12. Verwendung von Verbindungen nach einem der Ansprüche 1 bis 4 als Additive, vorzugsweise als Pigmentnetz- und/oder Dispergiermittel, für vorzugsweise wässrige Pigmentpasten, Lacke und Druckfarben.

13. Verwendung einer Zusammensetzung nach einem der Ansprüche 9 bis 11 zur Herstellung von Lacken und Druckfarben/Drucklacken, von bindemittelhaltigen oder bindemittelfreien Pigmentpasten, und Beschichtungsstoffen.

## Claims

1. Compounds liquid at a temperature of 20°C and a pressure of 101325 Pa and of the general formula (I)
[R-O(SO)ₐ(EO)_{b}(CH₂CHCH₃O)_{c}(BO)_{d}]ₓ-[PO-(OH)_{3-X}]_{y}-R⁴_{z} (I),
or liquid mixtures consisting of compounds of the formula (I),
where
R = 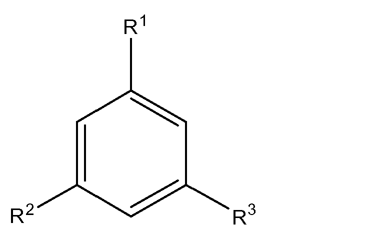 R¹ = bond to the unit -O(SO)ₐ(EO)_{b}(CH₂CHCH₃O)_{c}(BO)_{d}-,
R² = identically or differently, H or - O(SO)ₐ(EO)_{b}(CH₂CHCH₃O)_{c}(BO)_{d}-[PO-(OH)_{2-x'}(R⁵)_{x'}]_{y'}-R⁴_{z'},
R³ = identically or differently, saturated or unsaturated aliphatic hydrocarbon radical having 15 carbon atoms and 25 to 31 hydrogen atoms,
R⁴ = identically or differently, H, M⁺ or alkyl having 1 to 3 C atoms,
R⁵ = organic radical,
R⁶ = identically or differently H or M⁺,
M⁺ = metal or semi-metal cation,
SO = styrene oxide,
EO = ethylene oxide,
BO = butylene oxide, and
a = 0 to 3,
b = 0 to 100, preferably at least 1,
c = 0 to 20,
d = 0 to 3,
x = 1 to 3,
y = 0 or 1,
z = 0 or 1,
y' = 0 or 1,
z' = 0 or 1, and
x' = 0 to 2,
with the proviso that y + z is = 1, that when z = 1, also x is = 1, that y' + z' = 1, that when z' = 1, also x' is = 1, that when a, c and d are = 0, b is from 1 to 12, preferably from 6 to 10, that when c or d is other than 0, one of the other indices a to d is likewise other than 0, and that the sum a + b + c + d is greater than 3.

2. Compounds according to Claim 1, **characterized in that** R² is = H, y is = 1 and z is = 0.

3. Compounds according to Claim 1 or 2, **characterized in that** the units denoted with the indices a, b, c and/or d are arranged blockwise.

4. Compounds according to any of Claims 1 to 3, **characterized in that** the unit which is the furthest away from the radical R, and which has a bond to the phosphorus or to R⁴, is an ethylene oxide unit.

5. Process for preparing compounds according to any of Claims 1 to 4, **characterized in that** it comprises the steps of
A) activating a starter compound containing OH groups with a suitable acidic, basic or DMC catalyst,
B) reacting the compounds obtained in step A) with aliphatic and/or aromatic alkylene oxides, the aliphatic and/or aromatic alkylene oxides being used in molar amounts such that the indices a, b, c and d indicated in formula (I) are obtained,
C) optionally reacting the compound obtained in step B) with a phosphorus compound which forms phosphoric esters, and
D) optionally reacting the compound obtained in step C) with a neutralizing agent.

6. Process according to Claim 5, **characterized in that** in step B) the reaction of the different aliphatic and/or aromatic alkylene oxides takes place in succession.

7. Process according to Claim 5 or 6, **characterized in that** step C) is carried out and polyphosphoric acid (P₂O₅ in solution in H₃PO₄) is used as phosphorus compound.

8. Process according to Claim 7, **characterized in that** 0.5 mol of P₂O₅ is used per mol of OH groups.

9. Compositions comprising at least one compound according to any of Claims 1 to 4.

10. Compositions according to Claim 9, **characterized in that** the composition comprises at least one compound according to any of Claims 1 to 4 and also water, or consists of these components.

11. Composition according to Claim 9 or 10, **characterized in that** the composition comprises at least one pigment.

12. Use of compounds according to any of Claims 1 to 4 as additives, preferably as pigment wetting agents and/or dispersants, for preferably aqueous pigment pastes, paints and printing inks.

13. Use of a composition according to any of Claims 9 to 11 for preparing paints and printing inks/printing varnishes, binder-containing or binder-free pigment pastes, and coating materials.

## Revendications

1. Composés liquides à une température de 20 °C et sous une pression de 101325 Pa, de formule générale (I) [R-O(SO)ₐ(EO)_{b}(CH₂CHCH₃O)_{c}(EO)_{d}]ₓ-[PO-(OH)₃₋ₓ]y-R⁴_{z} (I) ou mélanges liquides consistant en des composés de formule (I),
où
R = 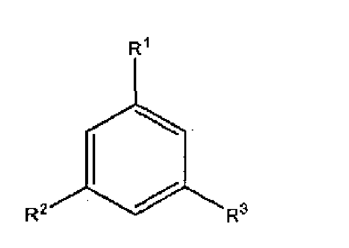
R¹ - liaison à l'unité -O(SO)ₐ(EO)_{b}(CH₂CHCH₃0)_{c}(BO)_{d}-
R², le même ou différent, représente H ou -O(SO)ₐ(EO)_{b}(CH₂CHCH₃O)_{c}(EO)_{d}-[PO-(OH)_{2-x'}(R⁵)_{x'}]_{y'}-R⁴_{z'},
R³, le même ou différent, représente un radical hydrocarboné aliphatique saturé ou insaturé, ayant 15 atomes de carbone et 25 à 31 atomes d'hydrogène,
R⁴, le même ou différent, représente H, M⁺ ou un groupe alkyle ayant de 1 à 3 atomes de carbone,
R⁵ - radical organique,
R⁶, le même ou différent, représente H ou M⁺,
M = cation métallique ou semi-métallique,
SO = oxyde de styrène,
EO = oxyde d'éthylène,
BO = oxyde de butylène et
a = 0 à 3,
b = 0 à 100, de préférence au moins 1,
c = 0 à 20.
d = 0 à 3,
x = 1 à 3,
y = 0 ou 1,
z = 0 ou 1,
y' = 0 ou 1
z' - 0 ou 1 et
x' = 0 à 2,
étant entendu que y + z = 1, que lorsque z = 1 x vaut également 1, que y' + z' = 1, que lorsque z" = 1 x' vaut également 1, que lorsque a, c et d valent 0 b vaut de 1 à 12, de préférence de 6 à 10, que lorsque c ou d est différent de 0 l'un des autres indices a à b est également différent de 0, et que la somme a + b + c + d est supérieure à 3.

2. Composés selon la revendication 1, **caractérisés en ce que** R² = H, y = 1 et z = 0.

3. Composés selon la revendication 1 ou 2, **caractérisés en ce que** les unités notées avec les indices a, b, c et/ou d sont disposées séquentiellement.

4. Composés selon l'une quelconque des revendications 1 à 3, **caractérisés en ce que** l'unité la plus éloignée du radical R, qui comporte une liaison au phosphore ou à R⁴, est une unité oxyde d'éthylène.

5. Procédé pour la préparation de composés selon l'une quelconque des revendications 1 à 4, **caractérisé en ce qu'**il comporte les étapes
A) activation d'un composé de départ contenant des groupes OH avec un catalyseur acide, basique ou DMC approprié,
B) mise en réaction des composés obtenus dans l'étape A) avec des oxydes d'alkylène aliphatiques et/ou aromatiques, en utilisant les oxydes d'alkylène aliphatiques et/ou aromatiques en quantités molaires telles qu'on obtient les indices a, b, c et d indiqués dans la formule (I),
C) mise en réaction optionnelle du composé obtenu dans l'étape B) avec un composé phosphore formant des esters d'acide phosphorique et
D) éventuellement mise en réaction du composé obtenu dans l'étape C) avec un agent de neutralisation.

6. Procédé selon la revendication 5, **caractérisé en ce que** dans l'étape B) les divers oxydes d'alkylène aliphatiques et/ou aromatiques sont mis en réaction les uns après les autres.

7. Procédé selon la revendication 5 ou 6, **caractérisé en ce qu'**on effectue l'étape C) et on utilise comme composé phosphore de l'acide polyphosphorique (P₂O₅ dissous dans H₃PO₄).

8. Procédé selon la revendication 7, **caractérisé en ce qu'**on utilise 0,5 mole de P₂O₅ par mole de groupes OH.

9. Compositions contenant au moins un composé selon l'une quelconque des revendications 1 à 4.

10. Compositions selon la revendication 9, **caractérisées en ce que** la composition contient au moins un composé selon l'une quelconque des revendications 1 à 4 ainsi que de l'eau ou consiste en ces composants.

11. Composition selon la revendication 9 ou 10, **caractérisée en ce que** la composition contient au moins un pigment.

12. Utilisation de composés selon l'une quelconque des revendications 1 à 4, en tant qu'additifs, de préférence en tant que qu'agent mouillant et/ou dispersant de pigment, de préférence pour pâtes de pigments, peintures et encres d'impression, aqueuses.

13. Utilisation d'une composition selon l'une quelconque des revendications 9 à 11, pour la production de peintures et d'encres d'impression/laques d'impression, de pâtes de pigments contenant des liants ou sans liant, et de matières de revêtement.
